# EUROPEAN PATENT APPLICATION

(11) **EP 4 213 267 A1**
(43) Date of publication of application: **19.07.2023**
(21) Application number: 20953344.7
(22) Date of filing: 14.09.2020
(51) Int. Cl.: H01M 10/0569, H01M 4/134, H01M 4/66, H01M 10/052

(54) **LITHIUM SECONDARY BATTERY**

(71) Applicant: TERAWATT TECHNOLOGY K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/034710
(87) International publication number: WO 2022/054279

(57) **Abstract**

The present invention provides a lithium secondary battery that has high energy density and excellent cycle characteristics. The present invention relates to a lithium secondary battery including a positive electrode, a separator, a negative electrode that is free of a negative electrode active material, and an electrolytic solution, in which the electrolytic solution contains, as a solvent, a compound having at least one of a monovalent group represented by Formula (A) or a monovalent group represented by Formula (B).

## Description

### Technical Field

The present invention relates to a lithium secondary battery.

### Background Art

In recent years, techniques for converting natural energy such as solar power or wind power into electric energy have attracted more attention. Accordingly, various secondary batteries have been developed as power storage devices that are safe and that can store a large amount of electric energy.

Among these, secondary batteries that charge and discharge by exchanging metal ions between a positive electrode and a negative electrode are known to have a high voltage and high energy density, and are typically lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material. A lithium metal secondary battery has also been developed that does not use an active material in the negative electrode, but retains lithium by depositing lithium metal on the surface of the negative electrode.

For example, Patent Document 1 discloses a high energy density, high power lithium metal anode secondary battery with a volumetric energy density greater than 1000 Wh/L and/or a mass energy density greater than 350 Wh/kg when discharged at room temperature at a rate of at least 1C. Patent Document 1 discloses that an ultrathin lithium metal anode is used to realize this lithium metal anode secondary battery.

Patent Document 2 discloses a lithium secondary battery containing a positive electrode, a negative electrode, a separation film interposed between the electrodes, and an electrolyte, in which, in the negative electrode, metal particles are formed on a negative electrode current collector and are moved from the positive electrode by charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Documents

Patent Document 1: PCT Japanese Translation Patent Publication No. 2019-517722
Patent Document 2: PCT Japanese Translation Patent Publication No. 2019-537226

### Summary

### Technical Problem

When the present inventors studied batteries of the prior art including those described in patent documents mentioned above, they found that at least one of energy density or cycle characteristics was insufficient.

For example, a typical secondary battery that charges and discharges by exchanging metal ions between a positive electrode active material and a negative electrode active material does not have sufficient energy density. Meanwhile, in lithium metal secondary batteries of the prior art, that retain lithium by depositing lithium metal on the surface of a negative electrode, such as those described in patent documents mentioned above, dendritic lithium metal tends to form on the surface of the negative electrode after repeated charging and discharging, which makes short circuiting and capacity loss more likely to occur. As a result, the cycle characteristics are not sufficient.

A method has also been developed of applying a large amount of physical pressure to a lithium metal secondary battery to keep the interface between a negative electrode and a separator under high pressure and suppress discrete growth during lithium metal deposition. However, because a large mechanical mechanism is required to apply such a high level of pressure, the weight and volume of the battery increase as a whole, and the energy density decreases.

In view of these problems, it is an object of the present invention to provide a lithium secondary battery having high energy density and excellent cycle characteristics.

### Solution to Problem

A lithium secondary battery in the aspect of the present invention includes a positive electrode, a separator, a negative electrode that is free of a negative electrode active material, and an electrolytic solution, in which the electrolytic solution contains, as a solvent, a compound having at least one of a monovalent group represented by Formula (A) or a monovalent group represented by Formula (B) (the compound is simply referred to as "fluorinated alkyl compound"). 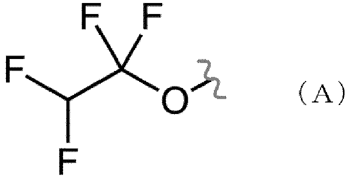 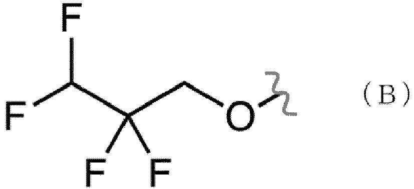 (in the formulae, a wavy line represents a bonding site in the monovalent group)

Because this lithium secondary battery includes a negative electrode that is free of a negative electrode active material, charging and discharging are performed by depositing lithium metal on the surface of the negative electrode and electrolytically dissolving the deposited lithium metal. As a result, energy density is improved.

The present inventors have found that, in a lithium secondary battery that contains, in the electrolytic solution, the fluorinated alkyl compound described above as a solvent, a solid electrolyte interphase layer ("SEI layer") is easily formed on the surface of the negative electrode. Because the SEI layer has ionic conductivity, reactivity of lithium deposition reaction on the surface of the negative electrode, on which the SEI layer is formed, is uniform in a planar direction of the surface of the negative electrode. Therefore, in the lithium secondary battery described above, the growth of the dendritic lithium metal on the negative electrode is suppressed, and the cycle characteristics are excellent. The factor that facilitates the formation of the SEI layer by containing the fluorinated alkyl compound as a solvent is not always clear, but factors described later can be considered in the embodiment for carrying out the invention.

The lithium secondary battery in the embodiment of the present invention preferably contains a fluorinated alkyl compound having an ether bond in the electrolytic solution as a solvent. Because the solubility of the electrolyte in the electrolytic solution is further improved and the SEI layer is more likely to be formed in this aspect of the present invention, the cycle characteristics of the lithium secondary battery are more excellent.

The electrolytic solution preferably contains two or more types of fluorinated alkyl compounds. For example, the electrolytic solution contains at least two selected from the group consisting of an ether compound having both the monovalent group represented by Formula (A) and the monovalent group represented by Formula (B), an ether compound that has the monovalent group represented by Formula (A) and is free of the monovalent group represented by Formula (B), and an ether compound that is free of the monovalent group represented by Formula (A) and has the monovalent group represented by Formula (B). Because the SEI layer is more easily formed in this aspect of the present invention, the cycle characteristics of the lithium secondary battery are more excellent.

It is preferable that the electrolytic solution further contains a fluorine-substituted alkyl ether compound that is free of the monovalent group represented by Formula (A) and is free of the monovalent group represented by Formula (B). In this aspect of the present invention, the solubility of the electrolyte in the electrolytic solution tends to be further improved, or the SEI layer tends to be formed more easily, and the cycle characteristics of the lithium secondary battery are more excellent.

An amount of the fluorinated alkyl compound is preferably 40% by volume or more relative to an overall amount of solvent components in the electrolytic solution. Because the SEI layer is more easily formed in this aspect of the present invention, the cycle characteristics of the lithium secondary battery are more excellent.

In the above-described lithium secondary battery, charging and discharging are preferably performed by depositing lithium metal on a surface of the negative electrode and dissolving the deposited lithium. In this aspect of the present invention, the energy density is further increased.

Preferably, the negative electrode is an electrode consisting of at least one selected from the group consisting of Cu, Ni, Ti, Fe, other metals that do not react with Li, alloys of these metals, and stainless steel (SUS). Because highly flammable lithium metal does not have to be used in this aspect of the present invention during production, safety and productivity are further improved. In addition, because such a negative electrode is stable, the cycle characteristics of the lithium secondary battery are further improved.

Preferably, no lithium foil is formed on a surface of the negative electrode in the lithium secondary battery before initial charging. Because highly flammable lithium metal does not have to be used in this aspect of the present invention during production, safety and productivity are further improved.

The above-described lithium secondary battery preferably has an energy density of 350 Wh/kg or more.

### Advantageous Effects of Invention

The present invention can provide a lithium secondary battery having high energy density and excellent cycle characteristics.

### Brief Description of Drawings

Fig. 1 is a schematic cross-sectional view of the lithium secondary battery in the embodiment of the present invention.
Fig. 2 is a schematic cross-sectional view of the lithium secondary battery in the embodiment of the present invention during use.

### Description of Embodiments

Embodiments of the present invention ("embodiments") will now be described with reference to the drawings when necessary. In the drawings, identical elements are designated by the same reference numbers, and redundant descriptions of these elements have been omitted. Positional relationships such as up, down, left, and right are based on the positional relationship shown in the drawings unless otherwise specified. The dimensional ratios shown in the drawings are not limited to the depicted ratios.

### [Embodiment]

### (Lithium Secondary Battery)

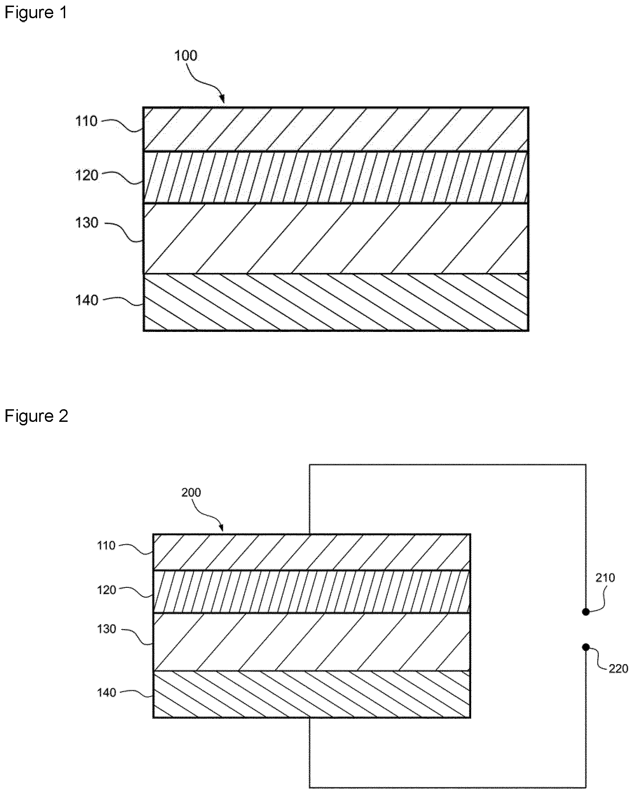

Fig. 1 is a schematic cross-sectional view of the lithium secondary battery in the embodiment of the present invention. As shown in Fig. 1, the lithium secondary battery 100 in the embodiment includes a positive electrode 120, a negative electrode 140 that is free of a negative electrode active material, a separator 130 that is disposed between the positive electrode 120 and the negative electrode 140, and an electrolytic solution that is not shown in Fig. 1. The positive electrode 120 has a positive electrode current collector 110 on a surface opposite to the surface facing the separator 130.

### (Negative Electrode)

The negative electrode 140 is free of a negative electrode active material. It is difficult to increase the energy density of a lithium secondary battery with a negative electrode containing a negative electrode active material due to the presence of the negative electrode active material. Because the lithium secondary battery 100 in the present embodiment has the negative electrode 140 that does not contain a negative electrode active material, such a problem does not occur. In other words, the lithium secondary battery 100 in the present embodiment has a high energy density because lithium metal is deposited on the negative electrode 140 and charging and discharging are performed by electrolytically dissolving deposited lithium metal.

In the embodiment, the "lithium metal is deposited on the negative electrode" means the lithium metal is deposited on at least one of the surface of the negative electrode or a surface of a solid electrolyte interphase (SEI) layer formed on the surface of the negative electrode, which will be described later. In the lithium secondary battery in the embodiment, it is considered that the lithium metal is mainly deposited on the surface of the SEI layer, but the position on which the lithium metal is deposited is not limited to this.

In the present specification, "negative electrode active material" refers to a material for retaining lithium ions or lithium metal serving as charge carrier ("carrier metal" below) on the negative electrode 140 in the battery, and may also be referred to as the carrier metal host material. Examples of retaining mechanisms include, but are not limited to, intercalation, alloying, and occlusion of metallic clusters, and intercalation is typically used. The negative electrode active material does not include the lithium metal itself.

Examples of negative electrode active materials include, but are not limited to, carbon-based substances, metal oxides, metals, and alloys. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. There are no particular restrictions on the metal or alloy as long as it can be alloyed with the carrier metal. Examples of the metal or alloy include silicon, germanium, tin, lead, aluminum, gallium, and alloys containing them.

There are no particular restrictions on the negative electrode 140 as long as it does not contain a negative electrode active material and can be used as a current collector. Examples of the negative electrode 140 include at least one selected from the group consisting of metals such as Cu, Ni, Ti, Fe, and other metals that do not react with Li, alloys of these metals, and stainless steel (SUS). When SUS is used as the negative electrode 140, any well-known type of SUS can be used. The negative electrode materials mentioned above may be used alone or in combinations of two or more. In the present specification, the "metal that does not react with Li" refers to a metal that does not react with lithium ions or lithium metal to form an alloy under the operating conditions of the lithium secondary battery.

The negative electrode 140 is preferably a lithium-free electrode. Because highly flammable lithium metal does not have to be used in the production process in this aspect of the present invention, the lithium secondary battery 100 with even better safety and productivity can be realized. From this standpoint and from the standpoint of improving the stability of the negative electrode 140, the negative electrode 140 preferably consists of at least one selected from the group consisting of Cu, Ni, alloys of these metals, and stainless steel (SUS). From the same standpoints, the negative electrode 140 more preferably consists of Cu, Ni, or alloys of these metals, and even more preferably of Cu or Ni.

In the present specification, a "negative electrode free of a negative electrode active material" means the amount of the negative electrode active material in the negative electrode is 10% by mass or less relative to the overall mass of the negative electrode. The amount of negative electrode active material in the negative electrode relative to the overall mass of the negative electrode is preferably 5.0% by mass or less relative to the overall mass of the negative electrode, and may be 1.0% by mass or less, 0.1 % by mass or less, or 0.0% by mass or less. The lithium secondary battery 100 has a negative electrode that is free of a negative electrode active material means that it is an anode free secondary battery, a zero anode secondary battery, or an anodeless secondary battery in the general sense of the terms.

The capacity of the negative electrode 140 may be sufficiently smaller than the capacity of the positive electrode 120, and may be, for example, 20% or less, 15% or less, 10% or less, or 5% or less. The capacities of the positive electrode 120 and the negative electrode 140 can be measured by any method common in the art, respectively.

The average thickness of the negative electrode 140 is preferably 4 µm or more and 20 µm or less, more preferably 5 µm or more and 18 µm or less, and even more preferably 6 µm or more and 15 µm or less. Because the volume occupied by the negative electrode 140 in the lithium secondary battery 100 is reduced in this aspect of the present invention, the energy density of the lithium secondary battery 100 is further improved.

### (Electrolytic Solution)

The electrolytic solution is a solution that contains an electrolyte and a solvent and has ionic conductivity, and acts as a conductive path for lithium ions. The electrolytic solution may be impregnated in the separator 130 or may be sealed together with a laminate of the positive electrode 120, the separator 130, and the negative electrode 140 inside a sealed container.

The electrolytic solution contains, as a solvent, a fluorinated alkyl compound having at least one of a monovalent group represented by Formula (A) or a monovalent group represented by Formula (B).

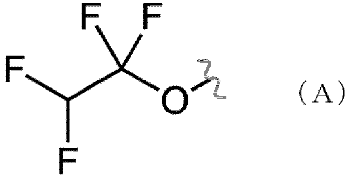

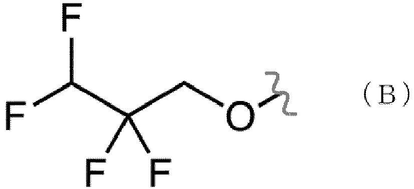

Here, in the formulae, a wavy line represents a bonding site in the monovalent group.

Generally, in an anode free lithium secondary battery containing the electrolytic solution, an SEI layer is formed on a surface of the negative electrode or the like by decomposing the solvent or the like in the electrolytic solution. Due to the SEI layer in the lithium secondary battery, further decomposition of components in the electrolytic solution, irreversible reduction of lithium ions caused by the decomposition, generation of gas, and the like are suppressed. In addition, because the SEI layer has ionic conductivity, reactivity of lithium deposition reaction on the surface of the negative electrode, on which the SEI layer is formed, is uniform in a planar direction of the surface of the negative electrode. Therefore, promoting the formation of the SEI layer is very important for improving the performance of the anode free lithium secondary battery. The present inventors have found that, in the lithium secondary battery containing the above-described fluorinated alkyl compound as a solvent, the SEI layer is easily formed on the surface of the negative electrode, and the growth of dendritic lithium metal on the negative electrode is further suppressed, and as a result, the cycle characteristics are further improved. The factors are not necessarily clear, but the following factors can be considered.

It is considered that not only the lithium ions but also the fluorinated alkyl compound as a solvent are reduced on the negative electrode during charging of the lithium secondary battery 100, particularly during initial charging. The portion represented by Formula (A) and the portion represented by Formula (B) in the fluorinated alkyl compound have high reactivity of oxygen atoms due to being substituted with a large number of fluorine. Therefore, it is presumed that a part or all of the portion represented by Formula (A) and the portion represented by Formula (B) are likely to be eliminated. As a result, during charging of the lithium secondary battery 100, a part or all of the portion represented by Formula (A) and the portion represented by Formula (B) are absorbed on the surface of the negative electrode, and since the SEI layer is formed starting from the absorbed portion, it is presumed that the SEI layer is likely to be formed in the lithium secondary battery 100. However, the suppressive factors are not limited to these.

Surprisingly, it is found that the SEI layer formed in the lithium secondary battery 100, that contains the above-described fluorinated alkyl compound, has higher ionic conductivity than SEI layers formed in lithium secondary batteries of the prior art. It is considered that this is because the portion represented by Formula (A) and the portion represented by Formula (B) are substituted with fluorine, so that the amount of fluorine in the formed SEI layer is high, and as a result, the exchanging path of the lithium ions in the SEI layer is increased or expanded. However, the suppressive factors are not limited to these.

Therefore, in the lithium secondary battery 100, the SEI layer is easily formed, but the internal resistance of the battery is low and the rate capability is excellent. That is, the lithium secondary battery 100 is excellent in cycle characteristics and rate capability. The "rate capability" means a performance capable of charging and discharging with large current, and it is known that the rate capability is excellent when the internal resistance of the battery is low.

In the portion represented by Formula (A) and the portion represented by Formula (B) of the fluorinated alkyl compound, some of the hydrogen atoms in the alkyl group are not substituted with fluorine atoms. Therefore, in the above-described lithium secondary battery 100 containing the fluorinated alkyl compound as a solvent, the concentration of the electrolyte in the electrolytic solution can be increased, so that the cycle characteristics and rate capability can be further improved.

In the present specification, a compound "contained as a solvent" means, in the usage environment of lithium secondary batteries, it is sufficient that the compound alone or a mixture of the compound with other compounds is a liquid, and furthermore, it is sufficient that the electrolyte can be dissolved to form an electrolytic solution in a solution phase.

In the embodiment of the present invention, the fluorinated alkyl compound is not particularly limited, and examples of the fluorinated alkyl compound include a compound having an ether bond ("ether compound"), a compound having an ester bond, and a compound having a carbonate bond. From the standpoint of further improving solubility of the electrolyte in the electrolytic solution and from the standpoint that the SEI layer is more easily formed, the fluorinated alkyl compound is preferably an ether compound.

Examples of the ether compound as the fluorinated alkyl compound include an ether compound having both the monovalent group represented by Formula (A) and the monovalent group represented by Formula (B) ("first fluorine solvent"), an ether compound that has the monovalent group represented by Formula (A) and is free of the monovalent group represented by Formula (B) ("second fluorine solvent"), and an ether compound that is free of the monovalent group represented by Formula (A) and has the monovalent group represented by Formula (B) ("third fluorine solvent").

Examples of the first fluorine solvent include 1,1,2,2-tetrafluoroethyl-2,2,3,3-tetrafluoropropyl ether, 1,1,2,2-tetrafluoroethyl-2,2,3,3-tetrafluoropropyl diethoxymethane, and 1,1,2,2-tetrafluoroethyl-2,2,3,3-tetrafluoropropyl diethoxypropane. From the standpoint of effectively and reliably exhibiting the effects of fluorinated alkyl compound mentioned above, 1,1,2,2-tetrafluoroethyl-2,2,3,3-tetrafluoropropyl ether is preferable as the first fluorine solvent.

Examples of the second fluorine solvent include 1,1,2,2-tetrafluoroethyl-2,2,2-trifluoroethyl ether, methyl-1,1,2,2-tetrafluoroethyl ether, ethyl-1,1,2,2-tetrafluoroethyl ether, propyl-1,1,2,2-tetrafluoroethyl ether, 1H,1H,5H-perfluoropentyl-1,1,2,2-tetrafluoroethyl ether, and 1H,1H,5H-octafluoropentyl-1,1,2,2-tetrafluoroethyl ether. From the standpoint of effectively and reliably exhibiting the effects of fluorinated alkyl compound mentioned above, 1,1,2,2-tetrafluoroethyl-2,2,2-trifluoroethyl ether, methyl-1,1,2,2-tetrafluoroethyl ether, ethyl-1,1,2,2-tetrafluoroethyl ether, or 1H,1H,5H-octafluoropentyl-1,1,2,2-tetrafluoroethyl ether is preferable as the second fluorine solvent.

Examples of the third fluorine solvent include difluoromethyl-2,2,3,3-tetrafluoropropyl ether, trifluoromethyl-2,2,3,3-tetrafluoropropyl ether, fluoromethyl-2,2,3,3-tetrafluoropropyl ether, and methyl-2,2,3,3-tetrafluoropropyl ether. From the standpoint of effectively and reliably exhibiting the effects of fluorinated alkyl compound mentioned above, difluoromethyl-2,2,3,3-tetrafluoropropyl ether is preferable as the third fluorine solvent.

It is sufficient that the electrolytic solution contains at least one kind of fluorinated alkyl compound. From the standpoint of further improving solubility of the electrolyte in the electrolytic solution and from the standpoint that the SEI layer is more easily formed, the electrolytic solution preferably contains two or more types of fluorinated alkyl compounds. From the same standpoint, the electrolytic solution preferably contains at least one kind selected from the group consisting of the first fluorine solvent, the second fluorine solvent, and the third fluorine solvent, more preferably contains at least two kinds selected from the group consisting of the first fluorine solvent, the second fluorine solvent, and the third fluorine solvent, and even more preferably at least three kinds selected from the group consisting of the first fluorine solvent, the second fluorine solvent, and the third fluorine solvent.

The electrolytic solution may contain a compound other than the fluorinated alkyl compound as a solvent. This compound is not particularly limited, and examples of the compound include a fluorine-substituted alkyl ether compound that is free of the monovalent group represented by Formula (A) and is free of the monovalent group represented by Formula (B) ("fourth fluorine solvent"), and a compound having no fluorine-substituted alkyl group ("co-solvent"). From the standpoint of further improving solubility of the electrolyte in the electrolytic solution and from the standpoint that the SEI layer is more easily formed, the electrolytic solution preferably contains the fourth fluorine solvent. The "fluorine-substituted alkyl ether compound" means an ether compound having a fluorine-substituted alkyl group, and the "fluorine-substituted alkyl group" means an alkyl group in which at least one hydrogen atom is substituted with fluorine.

In the fourth fluorine solvent, the ratio of the number of fluorine atoms to the total number of hydrogen atoms and fluorine atoms (F/(H + F)) is not particularly limited, but it may be 0.1 or more, 0.2 or more, or 0.5 or more. In addition, the fourth fluorine solvent preferably has a perfluoroalkyl group and an unsubstituted alkyl group. Examples of the perfluoroalkyl group include a linear or branched perfluoroalkyl group having 1 to 10 carbon atoms, and a linear perfluoroalkyl group having 2 to 6 carbon atoms is preferable. Examples of the unsubstituted alkyl group include a linear or branched unsubstituted alkyl group having 1 to 5 carbon atoms, and a linear unsubstituted alkyl group having 1 to 3 carbon atoms is preferable. Examples of the linear unsubstituted alkyl group having 1 to 3 carbon atoms include a methyl group and an ethyl group.

Examples of the fourth fluorine solvent include methyl nonafluorobutyl ether, ethyl nonafluorobutyl ether, 1,1,1,2,2,3,4,5,5,5-decafluoro-3-methoxy-4-trifluoromethylpentane, methyl-2,2,3,3,3-pentafluoropropyl ether, 1,1,2,3,3,3-hexafluoropropylmethyl ether, ethyl-1,1,2,3,3,3-hexafluoropropyl ether, and tetrafluoroethyltetrafluoropropyl ether. From the standpoint of effectively and reliably exhibiting the effects of fluorinated alkyl compound mentioned above, methyl nonafluorobutyl ether, ethyl nonafluorobutyl ether, or 1,1,1,2,2,3,4,5,5,5-decafluoro-3-methoxy-4-trifluoromethylpentane is preferable as the fourth fluorine solvent.

The co-solvent is not particularly limited as long as it is a compound that does not have a fluorine-substituted alkyl group, and examples of the co-solvent include dimethyl ether, triethylene glycol dimethyl ether, dimethoxyethane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, and triethyl phosphate. From the standpoint of further improving the solubility of the electrolyte in the electrolytic solution, the co-solvent is preferably a diether compound having two ether bonds, and more preferably dimethyl ether or triethylene glycol dimethyl ether.

As the solvent of the electrolytic solution, the fluorinated alkyl compound and the co-solvent described above can be freely used in combination, and the fluorinated alkyl compound may be used alone or in combinations of two or more. The co-solvent may or may not be contained in the electrolytic solution.

The amount of the fluorinated alkyl compound in the electrolytic solution is not particularly limited, but is preferably 40% by volume or more relative to the overall amount of the solvent components in the electrolytic solution, more preferably 50% by volume or more, even more preferably 60% by volume or more, and still more preferably 70% by volume or more. In a case where the amount of the fluorinated alkyl compound is within the above-described range, because the SEI layer is more easily formed, the cycle characteristics of the lithium secondary battery 100 are more excellent. The upper limit of the amount of the fluorinated alkyl compound is not particularly limited, and the amount of the fluorinated alkyl compound may be 100% by volume or less, 95% by volume or less, 90% by volume or less, or 80% by volume or less.

When the electrolytic solution contains the fourth fluorine solvent, the amount of the fourth fluorine solvent is not particularly limited, but is preferably more than 0% by volume relative to the overall amount of the solvent components in the electrolytic solution, more preferably 5% by volume or more, and even more preferably 8% by volume or more. In a case where the amount of the fourth fluorine solvent is within the above-described range, the solubility of the electrolyte in the electrolytic solution tends to be further improved, or the SEI layer tends to be more easily formed. The upper limit of the amount of the fourth fluorine solvent is not particularly limited, and the amount of the fourth fluorine solvent may be 20% by volume or less or 15% by volume or less.

When the electrolytic solution contains the co-solvent, the amount of the co-solvent is not particularly limited, but is preferably more than 0% by volume relative to the overall amount of the solvent components in the electrolytic solution, more preferably 5% by volume or more, and even more preferably 10% by volume or more. In a case where the amount of the co-solvent is within the above-described range, the solubility of the electrolyte in the electrolytic solution tends to be further improved. The amount of the co-solvent may be 20% by volume or more or 30% by volume or more. In addition, the amount of the co-solvent may be 60% by volume or less, 50% by volume or less, or 40% by volume or less.

The types of compounds that can be used as the solvent in the embodiment are illustrated in the following tables together with structural formulae. Table 1 illustrates examples of compounds that can be used as the fluorine solvent. In addition, Table 2 illustrates examples of compounds that can be used as the co-solvent. However, the types of compounds that can be used as the solvent are not limited thereto.

**[Table 1]**

| Fluorine solvent | | | | | |
|---|---|---|---|---|---|
| 1,1,2,2-Tetrafluoroethyl-2,2,3,3-tetrafluoropropyl ether | 1,1,2,2-Tetrafluoroethyl-2,2,2-trifluoroethyl ether | Ethyl-1,1,2,2-tetrafluoroethyl ether | Methyl-1,1,2,2-tetrafluoroethyl ether | 1H,1H,5H-Octafluoropentyl-1,1,2,2-tetrafluoroethyl ether | Difluoromethyl-2,2,3,3-tetrafluoropropyl ether |
| 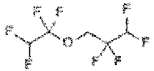 | 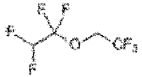 | 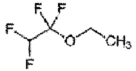 | 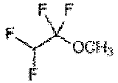 | 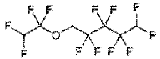 | 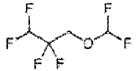 |
| I nonafluorobutyl ether | Ethyl nonafluorobutyl ether | 1,1,1,2,2,3,4,5,5, 5-Decafluoro-3-methoxy-4-trifluoromethylpen tane | Methyl-2,2,3,3,3-pentafluoropropyl ether | 1,1,2,3,3,3-Hexafluoropropyl methyl ether | Ethyl-1, 1,2,3,3,3-hexafluoropropyl ether |
| 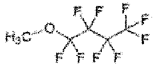 | 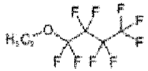 | 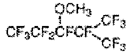 | 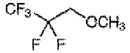 | 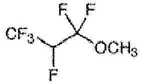 | 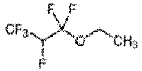 |

**[Table 2]**

| Co-solvent | | |
|---|---|---|
| Dimethoxymethane | 1,2-Dimethoxyethane | 1,2-Diethoxyethane |
| 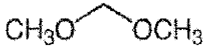 | 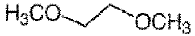 | 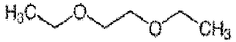 |
| 1,2-Dimethoxypropane | Diethylene glycol dimethyl ether | Triethylene glycol dimethyl ether |
| 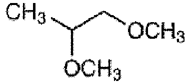 | 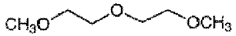 | 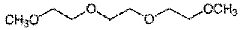 |

There are no particular restrictions on the electrolyte that is contained in the electrolytic solution as long as it is a salt. Examples of the electrolyte include salts of Li, Na, K, Ca, and Mg. A lithium salt is preferably used as the electrolyte. Examples of lithium salts that can be used include, but are not limited to, Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄. From the standpoint of further improving the energy density and cycle characteristics of the lithium secondary battery 100, LiN(SO₂F)₂, or LiBF₂(C₂O₄) is preferable as the lithium salt. In addition, when the electrolytic solution contains at least one of LiN(SO₂F)₂, or LiBF₂(C₂O₄), the formation and growth of the SEI layer on the surface of the negative electrode are further promoted, and this tends to make it possible to obtain a lithium secondary battery 100 having more excellent cycle characteristics. These lithium salts can be used alone or in combinations of two or more.

The concentration of the electrolyte in the electrolytic solution is not particularly limited, but is preferably 0.5 M or more, more preferably 0.7 M or more, even more preferably 0.9 M or more, and still more preferably 1.0 M or more. When the concentration of the electrolyte is within the above-described range, the SEI layer is more easily formed and the internal resistance tends to be further lowered. In particular, in the lithium secondary battery 100 containing the fluorinated alkyl compound as a solvent, the concentration of the electrolyte in the electrolytic solution can be increased, so that the cycle characteristics and rate capability can be further improved. The upper limit of the concentration of the electrolyte is not particularly limited, and the concentration of the electrolyte may be 10.0 M or less, 5.0 M or less, or 2.0 M or less.

The fact that the electrolytic solution contains the fluorinated alkyl compound can be confirmed by any method common in the art. Examples of such a method include an NMR measurement method, a mass analysis method such as HPLC-MS, and an IR measurement method.

### (Solid Electrolyte Interphase Layer)

It is presumed that, in the lithium secondary battery 100, a solid electrolyte interphase layer (SEI layer) is formed on the surface of the negative electrode 140 by charging, particularly initial charging, but the lithium secondary battery 100 may not have the SEI layer. It is presumed that the SEI layer to be formed includes an organic compound derived from at least one of the portion represented by Formula (A) or the portion represented by Formula (B) of the above-described fluorinated alkyl compound, but for example, other lithium-containing inorganic compounds, lithium-containing organic compounds, or the like may be included.

The lithium-containing organic compound and the lithium-containing inorganic compound are not particularly limited as long as they are included in any well-known SEI layer. Examples of the lithium-containing organic compound include, but are not limited to, organic compounds such as lithium alkyl carbonate, lithium alkoxide, and lithium alkyl ester, and examples of the lithium-containing inorganic compound include, but are not limited to, LiF, Li₂CO₃, Li₂O, LiOH, a lithium borate compound, a lithium phosphate compound, a lithium sulfate compound, a lithium nitrate compound, a lithium nitrite compound, and a lithium sulfite compound.

Because the lithium secondary battery 100 contains the fluorinated alkyl compound as a solvent, the formation of the SEI layer is promoted. Because the SEI layer has ionic conductivity, reactivity of lithium deposition reaction on the surface of the negative electrode, on which the SEI layer is formed, is uniform in a planar direction of the surface of the negative electrode. Therefore, in the lithium secondary battery 100, the growth of the dendritic lithium metal on the negative electrode is suppressed, and the cycle characteristics are excellent.

The typical average thickness of the SEI layer is 1 nm or more and 10 µm or less. When the SEI layer is formed in the lithium secondary battery 100, the lithium metal deposited by charging the battery may be deposited at the interface between the negative electrode 140 and the SEI layer, and may be deposited at the interface between the SEI layer and the separator.

### (Positive Electrode)

The positive electrode 120 is not particularly limited as long as it is a positive electrode commonly used in a lithium secondary battery, and a known material can be selected as needed, depending on the use of the lithium secondary battery. From the standpoint of increasing the stability and output voltage of the lithium secondary battery 100, the positive electrode 120 preferably contains a positive electrode active material.

In the present specification, the "positive electrode active material" means a material used to retain a lithium element (typically, lithium ions) in the positive electrode of the battery, and may be referred to as a host material for the lithium element (typically, lithium ions). Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds. Typical examples of positive electrode active materials include LiCoO₂, LiNiₓCo_{y}Mn_{z}O₂ (x + y + z = 1), LiNiₓMn_{y}O₂ (x + y = 1), LiNiO₂, LiMn₂O₄, LiFePO₄, LiCoPO₄, FeF₃, LiFeOF, LiNiOF, and TiS₂.

The positive electrode active materials mentioned above can be used alone or in combinations of two or more. The positive electrode 120 may contain components other than the positive electrode active material. Examples of these components include, but are not limited to, commonly used conductive aids, binders, solid polymer electrolytes, and inorganic solid electrolytes.

Examples of conductive aids that can be used in the positive electrode 120 include, but are not limited to, carbon black, single-wall carbon nanotubes (SW-CNT), multi-wall carbon nanotubes (MW-CNT), carbon nanofibers, and acetylene black. Examples of binders include, but are not limited to, polyvinylidene fluoride, polytetrafluoroethylene, styrene butadiene rubber, acrylic resins, and polyimide resins.

The amount of the positive electrode active material in the positive electrode 120 may be, for example, 50% by mass or more and 100% by mass or less relative to the overall mass of the positive electrode 120. The amount of the conductive aid in the positive electrode 120 may be, for example, 0.5% by mass or more and 30% by mass or less relative to the overall mass of the positive electrode 120. The amount of the binder in the positive electrode 120 may be, for example, 0.5% by mass or more and 30% by mass or less relative to the overall mass of the positive electrode 120. The total amount of the solid polymer electrolyte and the inorganic solid electrolyte may be 0.5% by mass or more and 30% by mass or less relative to the overall mass of the positive electrode 120.

### (Positive Electrode Current Collector)

The positive electrode 120 has, on one side thereof, a positive electrode current collector 110. The positive electrode current collector 110 is not particularly limited as long as it is a conductor that does not react with lithium ions in the battery. Examples of such a positive electrode current collector include aluminum.

The average thickness of the positive electrode current collector 110 is preferably 4 µm or more and 20 µm or less, more preferably 5 µm or more and 18 µm or less, and even more preferably 6 µm or more and 15 µm or less. Because the volume occupied by the positive electrode current collector 110 in the lithium secondary battery 100 is reduced in this aspect of the present invention, the energy density of the lithium secondary battery 100 is further improved.

### (Separator)

The separator 130 is the component that separates the positive electrode 120 and the negative electrode 140 to prevent short circuiting of the battery, while maintaining conductivity of the lithium ions serving as the charge carrier between the positive electrode 120 and the negative electrode 140. The separator 130 consists of a material that does not have electronic conductivity and that does not react with lithium ions. The separator 130 also plays a role in retaining the electrolytic solution. There are no particular restrictions on the separator 130 as long as it can play this role. The separator 130 can be composed of, for example, a porous polyethylene (PE) film, a polypropylene (PP) film, or a laminated structure thereof.

The separator 130 may be coated with a separator coating layer. The separator coating layer can be applied to one or both sides of the separator 130. The separator coating layer is not particularly limited as long as it has ionic conductivity and does not react with lithium ions. The separator coating layer preferably bonds the separator 130 to the adjacent layer firmly. Examples of such a separator coating layer include, but are not limited to, a layer containing a binder such as polyvinylidene fluoride (PVDF), styrene butadiene rubber and carboxymethyl cellulose (SBR-CMC) mixtures, polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, magnesium hydroxide, and lithium nitrate in the above-described binder. The separator 130 includes a separator having a separator coating layer.

The average thickness of the separator 130 is preferably 20 µm or less, more preferably 18 µm or less, and even more preferably 15 µm or less. Because the volume occupied by the separator 130 in the lithium secondary battery 100 is reduced in this aspect of the present invention, the energy density of the lithium secondary battery 100 is further improved. The average thickness of the separator 130 is also preferably 5 µm or more, more preferably 7 µm or more, and even more preferably 10 µm or more. In this aspect of the present invention, the positive electrode 120 and the negative electrode 140 can be separated more reliably, and short circuiting of the battery can be further suppressed.

### (Use of Lithium Secondary Battery)

Fig. 2 illustrates one use aspect of the lithium secondary battery in the embodiment. The lithium secondary battery 200 has a positive electrode terminal 210 and a negative electrode terminal 220 for connecting the lithium secondary battery 200 to an external circuit and these terminals are connected to a positive electrode current collector 110 and the negative electrode 140, respectively. The lithium secondary battery 200 is charged and discharged by connecting the negative electrode terminal 220 to one end of the external circuit and connecting the positive electrode terminal 210 to the other end of the external circuit.

The lithium secondary battery 200 is charged by applying voltage between the positive electrode terminal 210 and the negative electrode terminal 220 so that current flows from the negative electrode terminal 220 to the positive electrode terminal 210 via the external circuit. In the lithium secondary battery 200, it is presumed that a solid electrolyte interphase layer (SEI layer) is formed on the surface of the negative electrode 140 (at the interface between the negative electrode 140 and the separator 130) by initial charging, but the lithium secondary battery 200 may not have the SEI layer. By charging the lithium secondary battery 200, the lithium metal is deposited on the interface between the negative electrode 140 and the SEI layer, on the interface between the negative electrode 140 and the separator 130, and/or on the interface between the SEI layer and the separator 130.

When the positive electrode terminal 210 and the negative electrode terminal 220 in the charged lithium secondary battery 200 are connected, the lithium secondary battery 200 is discharged. As a result, the deposition of the lithium metal generated on the negative electrode is electrolytically dissolved. When the SEI layer is formed in the lithium secondary battery 200, the deposition of lithium metal generated at least at the interface between the negative electrode 140 and the SEI layer and/or the interface between the SEI layer and the separator 130 is electrolytically dissolved.

### (Lithium Secondary Battery Production Method)

There are no particular restrictions on the method used to produce the lithium secondary battery 100 shown in Fig. 1 as long as it can produce a lithium secondary battery with the configuration described above. The following method is an example.

The positive electrode current collector 110 and the positive electrode 120 may be produced in the following manner. Such a positive electrode active material as mentioned above, a known conductive aid, and a known binder are mixed together to obtain a positive electrode mixture. The mixing ratio may be, for example, 50% by mass or more and 99% by mass or less of the positive electrode active material, 0.5% by mass or more and 30% by mass or less of the conductive aid, and 0.5% by mass or more and 30% by mass or less of the binder relative to the entire mass of the positive electrode mixture. The resulting positive electrode mixture is applied to one surface of a metal foil (for example, Al foil) as a positive electrode current collector, that has a predetermined thickness (for example, 5 µm or more and 1 mm or less), and then press-molded. The resulting molded material is punched to a predetermined size to obtain a positive electrode current collector 110 and a positive electrode 120.

Next, a negative electrode material, such as metal foil (such as electrolytic Cu foil) with a thickness of 1 µm or more and 1 mm or less, is washed with a solvent containing sulfamic acid, punched out to a predetermined size, washed again ultrasonically with ethanol, and then dried to obtain the negative electrode 140.

Next, the separator 130 with the configuration described above is prepared. The separator 130 may be produced using any method common in the art, or a commercially available one may be used.

Next, a solution obtained by mixing at least one kind of the above-described fluorinated alkyl compound, and as necessary, the above-described fourth fluorine solvent and/or co-solvent is prepared as a solvent, and the electrolytic solution is prepared by dissolving an electrolyte such as a lithium salt in this solution. The mixing ratio of the solvent and the electrolyte may be appropriately adjusted so that the type of each solvent and electrolyte, and the amount or concentration in the electrolytic solution are within the above-described ranges.

The positive electrode current collector 110 on which the positive electrode 120 is formed, the separator 130, and the negative electrode 140 obtained as described above are laminated in this order such that the positive electrode 120 faces the separator 130 to obtain a laminate. The resulting laminate is then sealed in a sealed container together with the electrolytic solution to obtain the lithium secondary battery 100. There are no particular restrictions on the sealed container. Examples of the sealed container include a laminated film.

### [Modification Example]

The embodiments described above are provided merely to explain the present invention and are not intended to limit the present invention to the embodiments. Various modifications are possible without departing from the scope and spirit of the present invention.

For example, in the lithium secondary battery 100 in the embodiment, each component may not be formed as a laminate, but may be fixed at a distance and filled with the electrolytic solution.

In the lithium secondary battery 100, for example, an auxiliary member that assists the deposition and/or dissolution of lithium metal between the separator 130 and the negative electrode 140 during charging and discharging may be provided. Examples of such an auxiliary member include members containing a metal that is alloyed with the lithium metal, and may be, for example, a metal layer formed on the surface of the negative electrode 140. Examples of such a metal layer include layers containing at least one selected from the group consisting of Si, Sn, Zn, Bi, Ag, In, Pb, Sb, and Al. The average thickness of the metal layer may be, for example, 5 nm or more and 500 nm or less.

In this aspect of including the above-described auxiliary member in the lithium secondary battery 100, because affinity between the negative electrode and the lithium metal deposited on the negative electrode is further improved, peeling of the lithium metal deposited on the negative electrode is further suppressed, and the cycle characteristics tend to be further improved. The auxiliary member may contain the metal that is alloyed with the lithium metal, but the capacity thereof is sufficiently smaller than the capacity of the positive electrode. In a typical lithium ion secondary battery, the capacity of the negative electrode active material contained in the negative electrode is set to be about the same as the capacity of the positive electrode, but because the capacity of the auxiliary member is sufficiently smaller than the capacity of the positive electrode, the lithium secondary battery 100 including such an auxiliary member can be said to "include a negative electrode that is free of a negative electrode active material". Therefore, the capacity of the auxiliary member may be sufficiently smaller than the capacity of the positive electrode 120, and may be, for example, 20% or less, 15% or less, 10% or less, or 5% or less.

In the lithium secondary batteries described in the embodiments, there may be no lithium foil to be formed between the separator and the negative electrode prior to the initial charging. When lithium foil is not formed between the separator or solid electrolyte and the negative electrode in the lithium secondary battery of the embodiments before the initial charging, highly flammable lithium metal is not used during production, and the lithium secondary battery with better safety and higher productivity is realized.

In the lithium secondary battery 100, a current collector may or may not be provided on the surface of the negative electrode disposed so as to be in contact with the negative electrode. Examples of such a current collector include, but are not limited to, those that can be used for the negative electrode material. When the lithium secondary battery has neither a positive electrode current collector nor a negative electrode current collector, the positive electrode and the negative electrode themselves serve as current collectors, respectively.

In the lithium secondary battery 100, a terminal for connecting to an external circuit may be attached to the positive electrode current collector and/or the negative electrode. For example, a metal terminal (for example, Al, Ni, and the like) of 10 µm or more and 1 mm or less may be connected to one or both of the positive electrode current collector and the negative electrode. As the connecting method, any method common in the art may be used, and for example, ultrasonic welding may be used.

In the present specification, "the energy density is high" and "high energy density" mean the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

In the present specification, "excellent cycle characteristics" means that the rate of decline in battery capacity is low before and after the number of times of charging and discharging cycles that can be expected during normal use. In other words, when comparing a first discharge capacity after initial charging and discharging to a discharge capacity after the number of times of charging and discharging cycles that can be expected during normal use, the capacity after the charging and discharging cycles has not declined significantly relative to the first discharge capacity after the initial charging and discharging. Here, "the number of times that can be expected during normal use" can be, for example, 30 times, 50 times, 70 times, 100 times, 300 times, or 500 times, depending on the application for the lithium secondary battery. In addition, the "capacity after the charging and discharging cycles not declining significantly relative to the first discharge capacity after the initial charging and discharging" depends on the application for the lithium secondary battery. For example, it may be 60% or more, 65% or more, 70% or more, 75% or more, 80% or more, or 85% or more of the first discharge capacity after the initial charging and discharging.

### Example

The following is a more detailed description of the present invention with reference to examples and comparative examples. The present invention is not limited in any way by these examples.

### [Example 1]

A lithium secondary battery was produced as follows.

First, 10 µm electrolytic Cu foil was washed with a solvent containing sulfamic acid, punched to a predetermined size (45 mm × 45 mm), washed ultrasonically with ethanol, and then dried. Thereafter, the Cu foil was degreased, washed with pure water, and then immersed in a plating bath containing Sb ions. The surface of the Cu foil was electrolytically plated while the Cu foil was allowed to stand horizontally, thereby plating the surface of the Cu foil with Sb to be a metal layer having a thickness of 100 nm. The Cu foil was taken out from the plating bath, washed with ethanol, and washed with pure water. The Cu foil coated with the Sb thin film was used as a negative electrode.

A positive electrode was produced. A mixture of 96 parts by mass LiNi_{0.85}Co_{0.12}Al_{0.03}O₂ positive electrode active material, 2 parts by mass carbon black conductive aid, and 2 parts by mass polyvinylidene fluoride (PVDF) binder was applied to one surface of 12 µm-thick Al foil and press-molded. The resulting molded material was punched to a predetermined size (40 mm × 40 mm) to obtain a positive electrode.

As a separator, a separator having a predetermined size (50 mm × 50 mm), in which both surfaces of a 12 µm-thick polyethylene microporous film were coated with a 2 µm-thick polyvinylidene fluoride (PVDF), was prepared.

An electrolytic solution was prepared as follows. 60% by volume of 1,1,2,2-tetrafluoroethyl-2,2,3,3-tetrafluoropropyl ether and 40% by volume of dimethyl ether were mixed with each other. An electrolytic solution was obtained by dissolving LiN(SO₂F)₂ in the resulting mixed solution so as to have a molar concentration of 1.3 M.

The positive electrode current collector on which the positive electrode was formed, the separator, and the negative electrode obtained as described above were laminated in this order such that the positive electrode faced the separator to obtain a laminate. A 100 µm-thick Al terminal and a 100 µm-thick Ni terminal were connected to the positive electrode current collector and the negative electrode by ultrasonic welding, respectively, and then the laminate is inserted into a laminated outer casing. Next, the electrolytic solution obtained as described above was injected into the outer casing. The outer casing was then sealed to obtain a lithium secondary battery.

### [Examples 2 to 67]

Lithium secondary batteries were obtained in the same manner as in Example 1, except that the electrolytic solutions were prepared using the solvents and electrolytes (lithium salts) described in Tables 1 to 14.

In Tables 1 to 14, "TTFE" represents 1,1,2,2-tetrafluoroethyl-2,2,3,3-tetrafluoropropyl ether, "TFEE" represents 1,1,2,2-tetrafluoroethyl-2,2,2-trifluoroethyl ether, "ETFE" represents ethyl-1,1,2,2-tetrafluoroethyl ether, "TFME" represents methyl-1,1,2,2-tetrafluoroethyl ether, "OFTFE" represents 1H,1H,5H-octafluoropentyl-1,1,2,2-tetrafluoroethyl ether, "DFTFE" represents difluoromethyl-2,2,3,3-tetrafluoropropyl ether, "NV7100" represents methyl nonafluorobutyl ether, "NV7200" represents ethyl nonafluorobutyl ether, and "NV7300" represents 1,1,1,2,2,3,4,5,5,5-decafluoro-3-methoxy-4-trifluoromethylpentane. In addition, "DME" represents dimethyl ether, "DGM" represents diethylene glycol dimethyl ether, and "TGM" represents triethylene glycol dimethyl ether. Regarding the lithium salt used as the electrolyte, "FSI" represents LiN(SO₂F)₂, and "LiDFOB" represents LiBF₂(C₂O₄).

In Tables 1 to 14, each solvent is classified into any one of the first fluorine solvent, the second fluorine solvent, the third fluorine solvent, the fourth fluorine solvent, and the co-solvent in the definitions described above, and one of the respective classifications is described. In the tables, for example, the first fluorine solvent is described as "First". In addition, in the tables, each solvent is described in terms of amount as % by volume together with its type, and each lithium salt is described in terms of concentration as volume molar concentration (M) together with its type. For example, in Example 1, it is described that 60% by volume of TTFE and 40% by volume of DME were contained as the solvent, and 1.3 M FSI was contained as the electrolyte.

### [Comparative Examples 1 and 2]

Lithium secondary batteries were obtained in the same manner as in Example 1, except that the electrolytic solutions were prepared using the solvents and electrolytes (lithium salts) described in Table 14. In Comparative Examples 1 and 2, the fluorinated alkyl compound was not contained, and the co-solvent was only contained as the solvent.

### [Evaluation of Cycle Characteristics]

The cycle characteristics of the lithium secondary batteries produced in the examples and the comparative examples were evaluated as follows.

The produced lithium secondary battery was CC-charged at 3.2 mA until the voltage reached 4.2 V (initial charging), and then CC-discharged at 3.2 mA until the voltage reached 3.0 V ("initial discharging"). Then, a cycle of CC-charging at 13.6 mA until the voltage reached 4.2 V and then CC-discharging at 20.4 mA until the voltage reached 3.0 V was repeated at a temperature of 25°C. Tables 1 to 14 show the capacity ("initial capacity") obtained from the initial discharging for each example. For the examples, the number of cycles (referred to as "Cycle" in the table) when the discharge capacity reached 80% of the initial capacity is shown in Table 1.

### [Measurement of Direct Current Resistance]

The produced lithium secondary battery was CC-charged at 5.0 mA to 4.2 V, and then CC-discharged at 30 mA, 60 mA, and 90 mA for 30 seconds, respectively. At this time, the lower limit voltage was set to 2.5 V, but in any of the examples, the voltage did not reach 2.5 V by the discharging for 30 seconds. In addition, between each discharging, CC-charging was performed again at 5.0 mA to 4.2 V, and the next CC-discharging was performed after the charging was completed. The direct current resistance (DCR) (unit: Ω) was obtained from the gradient of I-V characteristic obtained plotting a current value I and a voltage drop V obtained as described above, and linearly approximating each point.

**[Table 3]**

| | | | Example 1 | Example 2 | Example 3 | Example 4 |
|---|---|---|---|---|---|---|
| Solvent (type: % by volume) | Fluorine solvent | First | TTFE: 60 | TTFE: 70 | TTFE: 80 | TTFE: 90 |
| | Co-solvent | | DME: 40 | DME: 30 | DME: 20 | DME: 10 |
| Lithium salt (type: concentration (M)) | | | FSI: 1.3 M | FSI: 1 M | FSI: 1.3 M | FSI: 1.0 M |
| Characteristics | | Capacity (mAh) | 68 | 67 | 68 | 67 |
| | | DCR (Ω) | 4.1 | 4.2 | 4.3 | 4.8 |
| | | Cycle (times) | 116 | 125 | 140 | 135 |

**[Table 4]**

| | | | Example 5 | Example 6 | Example 7 | Example 8 | Example 9 |
|---|---|---|---|---|---|---|---|
| Solvent (type: % by volume) | Fluorine solvent | Second | TFEE: 60 | TFEE: 70 | TFEE: 80 | TFEE: 90 | TFEE: 100 |
| | Co-solvent | | DME: 40 | DME: 30 | DME: 20 | DME: 10 | - |
| Lithium salt (type: concentration (M)) | | | FSI: 2 M | FSI: 1.5 M | FSI: 1.2 M | FSI: 1 M | FSI: 0.8 M |
| Characteristics | | Capacity (mAh) | 69 | 68 | 67 | 67 | 66 |
| | | DCR (Ω) | 3.6 | 3.65 | 3.7 | 3.76 | 3.78 |
| | | Cycle (times) | 143 | 155 | 164 | 169 | 173 |

**[Table 5]**

| | | | Example 10 | Example 11 | Example 12 | Example 13 | Example 14 |
|---|---|---|---|---|---|---|---|
| Solvent (type: % by volume) | Fluorine solvent | Second | ETFE: 60 | ETFE: 70 | ETFE: 80 | ETFE: 90 | ETFE: 100 |
| | Co-solvent | | DME: 40 | DME: 30 | DME: 20 | DME: 10 | - |
| Lithium salt (type: concentration (M)) | | | FSI: 2M | FSI: 1.5 M | FSI: 1.2 M | FSI: 1 M | FSI: 0.7 M |
| Characteristics | | Capacity (mAh) | 69 | 68 | 67 | 67 | 66 |
| | | DCR (Ω) | 3.9 | 4 | 4.1 | 4.2 | 4.3 |
| | | Cycle (times) | 145 | 156 | 166 | 168 | 171 |

**[Table 6]**

| | | | Example 15 | Example 16 | Example 17 | Example 18 | Example 19 |
|---|---|---|---|---|---|---|---|
| Solvent (type: % by volume) | Fluorine solvent | Second | TFME: 60 | TFME: 70 | TFME: 80 | TFME: 90 | TFME: 100 |
| | Co-solvent | | DME: 40 | DME: 30 | DME: 20 | DME: 10 | - |
| Lithium salt (type: concentration (M)) | | | FSI: 2 M | FSI: 1.5 M | FSI: 1.2 M | FSI: 1 M | FSI: 0.7 M |
| Characteristics | | Capacity (mAh) | 69 | 68 | 67 | 67 | 66 |
| | | DCR (Ω) | 3.96 | 3.98 | 3.99 | 4.05 | 4.3 |
| | | Cycle (times) | 144 | 146 | 147 | 152 | 155 |

**[Table 7]**

| | | | Example 20 | Example 21 | Example 22 | Example 23 |
|---|---|---|---|---|---|---|
| Solvent (type: % by volume) | Fluorine solvent | Second | OFTFE: 60 | OFTFE: 70 | OFTFE: 80 | OFTFE: 90 |
| | Co-solvent | | DME: 40 | DME: 30 | DME: 20 | DME: 10 |
| Lithium salt (type: concentration (M)) | | | FSI: 2 M | FSI: 1.5 M | FSI: 1.2 M | FSI: 1 M |
| Characteristics | Capacity (mAh) | 69 | 68 | 67 | 67 | |
| | DCR (Ω) | 4.05 | 4.11 | 4.15 | 4.16 | |
| | Cycle (times) | 144 | 146 | 147 | 152 | |

**[Table 8]**

| | | | Example 24 | Example 25 | Example 26 | Example 27 |
|---|---|---|---|---|---|---|
| Solvent (type: % by volume) | Fluorine solvent | Third | DFTFE: 60 | DFTFE: 70 | DFTFE: 80 | DFTFE: 90 |
| | Co-solvent | | DME: 40 | DME: 30 | DME: 20 | DME: 10 |
| Lithium salt (type: concentration (M)) | | | FSI: 1.8 M | FSI: 1.3 M | FSI: 1 M | FSI: 0.8 M |
| Characteristics | | Capacity (mAh) | 69 | 68 | 67 | 67 |
| | | DCR (Ω) | 4.22 | 4.32 | 4.45 | 4.52 |
| | | Cycle (times) | 132 | 138 | 142 | 146 |

**[Table 9]**

| | | | Example 28 | Example 29 | Example 30 | Example 31 |
|---|---|---|---|---|---|---|
| Solvent (type: % by volume) | Fluorine solvent | Second | TFEE: 60 | TFEE: 70 | TFEE: 80 | TFEE: 90 |
| | Co-solvent | | DGM: 40 | DGM: 30 | DGM: 20 | DGM: 10 |
| Lithium salt (type: concentration (M)) | | | FSI: 1.9 M | FSI: 1.4 M | FSI: 1.1 M | FSI: 0.9 M |
| Characteristics | | Capacity (mAh) | 69 | 68 | 67 | 67 |
| | | DCR (Ω) | 3.7 | 3.84 | 3.88 | 3.91 |
| | | Cycle (times) | 147 | 158 | 168 | 171 |

**[Table 10]**

| | | | Example 32 | Example 33 | Example 34 | Example 35 |
|---|---|---|---|---|---|---|
| Solvent (type: % by volume) | Fluorine solvent | Second | TFEE: 60 | TFEE: 70 | TFEE: 80 | TFEE: 90 |
| | Co-solvent | | TGM: 40 | TGM: 30 | TGM: 20 | TGM: 10 |
| Lithium salt (type: concentration (M)) | | | FSI: 1.9 M | FSI: 1.4 M | FSI: 1.1 M | FSI: 0.9 M |
| Characteristics | | Capacity (mAh) | 69 | 68 | 67 | 67 |
| | | DCR (Ω) | 3.7 | 3.84 | 3.88 | 3.91 |
| | | Cycle (times) | 147 | 158 | 168 | 171 |

**[Table 11]**

| | | | Example 36 | Example 37 | Example 38 | Example 39 | Example 40 | Example 41 |
|---|---|---|---|---|---|---|---|---|
| Solvent (type: % by volume) | Fluorine solvent | First | - | - | - | TTFE: 10 | TTFE: 10 | TTFE: 10 |
| | | Second | TFEE: 40 | TFEE: 40 | TFEE: 40 | TFEE: 40 | TFEE: 40 | TFEE: 40 |
| | | | ETFE: 40 | TFME: 40 | OFTFE: 40 | ETFE: 40 | TFME: 40 | OFTFE: 40 |
| | Co-solvent | | DME: 20 | DME: 20 | DME: 20 | DME: 10 | DME: 10 | DME: 10 |
| Lithium salt (type: concentration (M)) | | | FSI: 1.2 M | FSI: 1.2 M | FSI: 1.2 M | FSI: 1.1 M | FSI: 1.1 M | FSI: 1.1 M |
| Characteristics | | Capacit y (mAh) | 68 | 67 | 68 | 68 | 68 | 68 |
| | | DCR (Ω) | 3.82 | 3.84 | 3.93 | 4.01 | 4.05 | 4.08 |
| | | Cycle (times) | 173 | 174 | 177 | 166 | 168 | 176 |

**[Table 12]**

| | | | Example 42 | Example 43 | Example 44 | Example 45 | Example 46 | Example 47 |
|---|---|---|---|---|---|---|---|---|
| Solvent (type: % by | Fluorine solvent | Second | TFEE: 40 | TFEE: 40 | TFEE: 40 | TFEE: 40 | TFEE: 40 | TFEE: 40 |
| | | | ETFE: 40 | TFME: 40 | OFTFE: 40 | ETFE: 40 | TFME: 40 | OFTFE: 40 |
| volume) | | Fourth | - | - | - | NV7100: | NV7100: | NV7100: |
| | | | | | | 10 | 10 | 10 |
| | Co-solvent | | DME: 10 | DME: 10 | DME: 10 | DME: 10 | DME: 10 | DME: 10 |
| | | | TGM: 10 | TGM: 10 | TGM: 10 | - | - | - |
| Lithium salt (type: concentration (M)) | | | FSI: 1.2 M | FSI: 1.2 M | FSI: 1.2 M | FSI: 1.1 M | FSI: 1.1 M | FSI: 1.1 M |
| Characteristics | | Capacit y (mAh) | 68 | 67 | 68 | 67 | 68 | 67 |
| | | DCR (Ω) | 3.77 | 3.78 | 3.67 | 3.55 | 3.65 | 3.54 |
| | | Cycle (times) | 174 | 178 | 179 | 175 | 174 | 173 |

**[Table 13]**

| | | | Example 48 | Example 49 | Example 50 | Example 51 | Example 52 | Example 53 |
|---|---|---|---|---|---|---|---|---|
| Solvent (type: % by volume) | Fluorine solvent | Second | TFEE: 40 | TFEE: 40 | TFEE: 40 | TFEE: 40 | TFEE: 40 | TFEE: 40 |
| | | | ETFE: 40 | TFME: 40 | OFTFE: 40 | ETFE: 40 | TFME: 40 | OFTFE: 40 |
| | | Fourth | NV7200: | NV7200: | NV7200: | NV7300: | NV7300: | NV7300: |
| | | | 10 | 10 | 10 | 10 | 10 | 10 |
| | Co-solvent | | DME: 10 | DME: 10 | DME: 10 | DME: 10 | DME: 10 | DME: 10 |
| Lithium salt (type: concentration (M)) | | | FSI: 1.1 M | FSI: 1.1 M | FSI: 1.1 M | FSI: 1.1 M | FSI: 1.1 M | FSI: 1.1 M |
| Characteristics | | Capacit y (mAh) | 68 | 68 | 67 | 68 | 68 | 68 |
| | | DCR (Ω) | 3.57 | 3.58 | 3.54 | 3.66 | 3.56 | 3.48 |
| | | Cycle (times) | 171 | 168 | 169 | 175 | 177 | 178 |

**[Table 14]**

| | | | Example 54 | Example 55 | Example 56 | Example 57 | Example 58 |
|---|---|---|---|---|---|---|---|
| Solvent (type: % by volume) | Fluorine solvent | First | TTFE: 40 | TTFE: 40 | TTFE: 10 | TTFE: 10 | TTFE: 10 |
| | | Second | TFEE: 40 | TFEE: 40 | TFEE: 40 | TFEE: 40 | TFEE: 40 |
| | | | | | ETFE: 30 | TFME: 30 | OFTFE: 30 |
| | | Third | DFTFE: 10 | DFTFE: 10 | - | - | - |
| | | Fourth | NV7100: 10 | NV7200: 10 | NV7200: 10 | NV7200: 10 | NV7200: 10 |
| | Co-solvent | | DME: 10 | DME: 10 | DME: 10 | DME: 10 | DME: 10 |
| Lithium salt (type: concentration (M)) | | | FSI: 1.1 M | FSI: 1.1 M | FSI: 1.1 M | FSI: 1.1 M | FSI: 1.1 M |
| Characteristics | | Capacity (mAh) | 67 | 67 | 68 | 68 | 67 |
| | | DCR (Ω) | 3.44 | 3.52 | 3.57 | 3.68 | 3.48 |
| | | Cycle (times) | 176 | 179 | 174 | 173 | 178 |

**[Table 15]**

| | | | Example 59 | Example 60 | Example 61 | Example 62 | Example 63 | Example 64 |
|---|---|---|---|---|---|---|---|---|
| Solvent (type: % by volume) | Fluorine solvent | First | TTFE: 10 | TTFE: 10 | TTFE: 10 | TTFE: 10 | TTFE: 10 | TTFE: 10 |
| | | Second | TFEE: 40 | TFEE: 40 | TFEE: 40 | TFEE: 40 | TFEE: 40 | TFEE: 40 |
| | | | ETFE: 20 | TFME: 20 | OFTFE: 20 | ETFE: 10 | TFME: 10 | OFTFE: 10 |
| | | Third | DFTFE: 10 | DFTFE: 10 | DFTFE: 10 | DFTFE: 10 | DFTFE: 10 | DFTFE: 10 |
| | | Fourth | NV7200: | NV7200: | NV7200: | NV7200: | NV7200: | NV7200: |
| | | | 10 | 10 | 10 | 10 | 10 | 10 |
| | Co-solvent | | DME: 10 | DME: 10 | DME: 10 | DME: 10 | DME: 10 | DME: 10 |
| | | | - | - | - | TGM: 10 | TGM: 10 | TGM: 10 |
| Lithium salt (type: concentration (M)) | | | FSI: 1.1 M | FSI: 1.1 M | FSI: 1.1 M | FSI: 1.1 M | FSI: 1.1 M | FSI: 1.1 M |
| Characteristics | | Capacit y (mAh) | 68 | 66 | 68 | 67 | 68 | 67 |
| | | DCR (Ω) | 3.58 | 3.59 | 3.54 | 3.66 | 3.67 | 3.69 |
| | | Cycle (times) | 177 | 179 | 177 | 181 | 182 | 183 |

**[Table 16]**

| | | | Example 65 | Example 66 | Example 67 | Comparative Example 1 | Comparative Example 2 |
|---|---|---|---|---|---|---|---|
| Solvent (type: % by | Fluorine solvent | First | TTFE: 10 | TTFE: 10 | TTFE: 10 | - | - |
| | | Secon d | TFEE: 40 | TFEE: 40 | TFEE: 40 | - | - |
| | | | ETFE: 10 | TFME: 10 | OFTFE: 10 | | |
| volume) | | Third | DFTFE: 10 | DFTFE: 10 | DFTFE: 10 | - | - |
| | | Fourth | NV7200: 10 | NV7200: 10 | NV7200: 10 | - | - |
| | Co-solvent | | DME: 10 | DME: 10 | DME: 10 | DME: 100 | DME: 100 |
| | | | TGM: 10 | TGM: 10 | TGM: 10 | - | - |
| Lithium salt (type: concentration (M)) | | | FSI: 0.8 M | FSI: 0.8 M | FSI: 0.8 M | FSI: 6 M | FSI: 1 M |
| | | | LiDFOB: | LiDFOB: | LiDFOB: | - | - |
| | | | 0.2 M | 0.2 M | 0.2 M | | |
| Characteristics | | Capaci ty (mAh) | 68 | 68 | 68 | 68 | 67 |
| | | DCR (Ω) | 3.57 | 3.68 | 3.47 | 3.68 | 3.88 |
| | | Cycle (times) | 184 | 188 | 186 | 40 | 10 |

In Tables 2, 3, 4, 9, 10, 12, 13, and 14, "-" means that the corresponding component was not contained.

From Tables 1 to 14, in Examples 1 to 67 in which the compound having at least one of the monovalent group represented by Formula (A) or the monovalent group represented by Formula (B) was contained as the solvent, as compared with Comparative Examples 1 and 2 in which the compound was not contained, it was found that the number of cycles was very high and the cycle characteristics were excellent. In addition, in Examples 1 to 67, it was found that the direct current resistance value was lower than the direct current resistance value expected from the very high cycle characteristics, and the direct current resistance value was equivalent to the direct current resistance values of Comparative Examples 1 and 2. From this, in Examples 1 to 67, it was found that the rate capability was also excellent with the excellent cycle characteristics.

### Industrial Applicability

Because the lithium secondary battery of the present invention has high energy density and excellent cycle characteristics, it has industrial applicability as a power storage device used in various applications.

### Reference Signs List

- 100, 200, 300: lithium secondary battery
- 110: positive electrode current collector
- 120: positive electrode
- 130: separator
- 140: negative electrode
- 210: positive electrode terminal
- 220: negative electrode terminal

## Claims

1. A lithium secondary battery comprising: a positive electrode; a separator; a negative electrode that is free of a negative electrode active material; and an electrolytic solution,
wherein the electrolytic solution contains, as a solvent, a compound having at least one of a monovalent group represented by Formula (A) or a monovalent group represented by Formula (B), 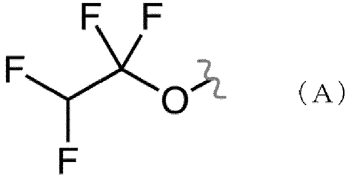 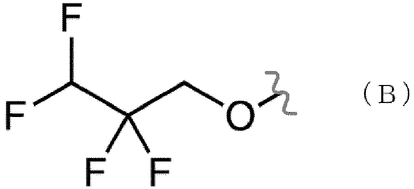 (in the formulae, a wavy line represents a bonding site in the monovalent group).

2. The lithium secondary battery according to claim 1, wherein the compound has an ether bond.

3. The lithium secondary battery according to claim 1 or 2, wherein the electrolytic solution contains two or more types of the compounds.

4. The lithium secondary battery according to any one of claims 1 to 3, wherein the electrolytic solution contains an ether compound having both the monovalent group represented by Formula (A) and the monovalent group represented by Formula (B).

5. The lithium secondary battery according to claim 4, wherein the electrolytic solution further contains an ether compound that has the monovalent group represented by Formula (A) and is free of the monovalent group represented by Formula (B).

6. The lithium secondary battery according to claim 4 or 5, wherein the electrolytic solution further contains an ether compound that is free of the monovalent group represented by Formula (A) and has the monovalent group represented by Formula (B).

7. The lithium secondary battery according to any one of claims 4 to 6, wherein the electrolytic solution further contains a fluorine-substituted alkyl ether compound that is free of the monovalent group represented by Formula (A) and is free of the monovalent group represented by Formula (B).

8. The lithium secondary battery according to any one of claims 1 to 7, wherein an amount of the compound is 40% by volume or more relative to an overall amount of solvent components in the electrolytic solution.

9. The lithium secondary battery according to any one of claims 1 to 8, wherein, in the lithium secondary battery, charging and discharging are performed by depositing lithium metal on a surface of the negative electrode and electrolytically dissolving the deposited lithium.

10. The lithium secondary battery according to any one of claims 1 to 9, wherein the negative electrode is an electrode consisting of at least one selected from the group consisting of Cu, Ni, Ti, Fe, other metals that do not react with Li, alloys of these metals, and stainless steel (SUS).

11. The lithium secondary battery according to any one of claims 1 to 10, wherein no lithium foil is formed on a surface of the negative electrode before initial charging.

12. The lithium secondary battery according to any one of claims 1 to 11, wherein an energy density is 350 Wh/kg or more.
